# EUROPEAN PATENT APPLICATION

(11) **EP 4 831 451 A1**
(43) Date of publication of application: **28.10.2026**
(21) Application number: 26174037.7
(22) Date of filing: 22.04.2026
(51) Int. Cl.: F01D 25/18, F02C 7/06, F02C 7/36

(54) **TURBOSHAFT CLUTCH LUBRICATION**

(30) Priority: 23.04.2025 US 202519187445
(71) Applicant: Pratt & Whitney Canada Corp., Longueuil, Québec J4G 1A1 (CA)
(72) Inventor: LANDRY-DROLET, Guillaume, Boucherville (CA); DESJARDINS, Michel, Saint-Hubert (CA)
(74) Representative: Dehns

(57) **Abstract**

A shaft and clutch arrangement includes a first rotating element, a shaft (40), rotatable about an axis of rotation (72), a second rotating element concentric with the shaft (40) and a clutch (38) assembly connecting the shaft (40) and the second rotating element. The shaft (40) includes a lubricant passage (56) to direct a flow of lubricant to the clutch (38) assembly for the lubrication thereof, and the second rotating element includes one or more lubricant outlet passages (62) to direct the flow of lubricant away from the clutch (38) assembly.

## Description

### TECHNICAL FIELD

Exemplary embodiments pertain to the art of aircraft systems, and in particular to lubrication of components of a turboshaft engine system, such as a clutch of an output shaft connected to the turboshaft engine.

### BACKGROUND

Oil or other lubricant is circulated through clutches of such aircraft propulsion systems to prevent overheating and premature wear of the clutch and to ensure smooth operation of the clutch. In a typical configuration, the circulated lubricant is directed to the clutch from other lubricated components, where the lubricant may accumulate dirt and other contaminants that may accumulate at the clutch thereby degrading operation of the clutch. The art would welcome apparatus to prevent such contaminant accumulation at the clutch.

### BRIEF DESCRIPTION

In one exemplary embodiment, a shaft and clutch arrangement includes a first rotating element, a shaft, rotatable about an axis of rotation, a second rotating element concentric with the shaft and a clutch assembly connecting the shaft and the second rotating element. The shaft includes a lubricant passage to direct a flow of lubricant to the clutch assembly for the lubrication thereof, and the second rotating element includes one or more lubricant outlet passages to direct the flow of lubricant away from the clutch assembly.

Additionally or alternatively, in this or other embodiment the clutch assembly includes a clutch body configured for engagement with the shaft and the second rotating element, and a clutch axial retainer extending around the axis of rotation. The clutch axial retainer is located at at least one axial end of the clutch body and is configured to axially position the clutch body relative to at least the shaft. The clutch axial retainer includes a radial retainer groove defining a gap between the shaft and the clutch axial retainer. The radial retainer groove is configured to direct the flow of lubricant from the clutch body to the one or more lubricant outlet passages.

Additionally or alternatively, in this or other embodiment the clutch axial retainer further includes a circumferential retainer groove having a groove central axis offset from the axis of rotation. The circumferential retainer groove is configured to direct the flow of lubricant toward the radial retainer groove.

Additionally or alternatively, in this or other embodiment the clutch assembly includes two clutch axial retainers positioned at opposing axial ends of the clutch body.

Additionally or alternatively, in this or other embodiment one or more bearing assemblies are positioned at and supportive of the shaft and the second rotating element.

Additionally or alternatively, in this or other embodiment the flow of lubricant is directed to the one or more bearing assemblies via the lubricant outlet passage of the shaft.

Additionally or alternatively, in this or other embodiment the second rotating element is a gear including an inner surface coupled to the clutch assembly.

Additionally or alternatively, in this or other embodiment the one or more lubricant outlet passages extend through the second rotating element.

In another exemplary embodiment, a turboshaft engine system includes a turboshaft engine including a combustor, and a turbine driven by combustion products of the combustor. The turbine includes a shaft rotated about an axis of rotation. An output shaft is operably connected to the shaft via a gear train. A clutch assembly is configured to operably connect an output gear of the gear train to the output shaft to drive rotation of the output shaft via rotation of the output gear about an output shaft axis of rotation. The output shaft includes a lubricant passage to direct a flow of lubricant to the clutch assembly for the lubrication thereof. The output gear includes one or more lubricant outlet passages to direct the flow of lubricant away from the clutch assembly.

Additionally or alternatively, in this or other embodiment the clutch assembly includes a clutch body configured for engagement with the output gear and the output shaft, and a clutch axial retainer extending around the output shaft axis of rotation. The clutch axial retainer is located at at least one axial end of the clutch body configured to axially position the clutch body relative to at least the output gear. The clutch axial retainer includes a radial retainer groove defining a gap between the output gear and the clutch axial retainer. The radial retainer groove is configured to direct the flow of lubricant from the clutch body to the one or more lubricant outlet passages.

Additionally or alternatively, in this or other embodiment the clutch axial retainer further includes a circumferential retainer groove having a groove central axis offset from the output shaft axis of rotation. The circumferential retainer groove is configured to direct the flow of lubricant toward the radial retainer groove.

Additionally or alternatively, in this or other embodiment the clutch assembly includes two clutch axial retainers positioned at opposing axial ends of the clutch body.

Additionally or alternatively, in this or other embodiment one or more bearing assemblies are positioned at and supportive of the output shaft and the output gear at the clutch assembly.

Additionally or alternatively, in this or other embodiment the flow of lubricant is directed to the one or more bearing assemblies via the lubricant outlet passage of the output shaft.

Additionally or alternatively, in this or other embodiment the output gear includes an output gear inner surface coupled to the clutch assembly.

Additionally or alternatively, in this or other embodiment the one or more lubricant outlet passages extend through the output gear.

Additionally or alternatively, in this or other embodiment the turboshaft engine is a two-spool turboshaft engine, and the shaft is a low pressure spool shaft of the turboshaft engine.

In yet another exemplary embodiment, a clutch assembly includes a clutch body configured to connect a first rotating element, a shaft, and a second rotating element concentric with the shaft. One or more clutch axial retainers extend around an axis of rotation of the shaft. The clutch axial retainer is located at at least one axial end of the clutch body and is configured to axially position the clutch body relative to at least the shaft. The clutch axial retainer includes a radial retainer groove defining a gap between the shaft and the clutch axial retainer. The radial retainer groove is configured to direct the flow of lubricant from the clutch body and out of the clutch assembly.

Additionally or alternatively, in this or other embodiment the clutch axial retainer further includes a circumferential retainer groove having a groove central axis offset from the axis of rotation. The circumferential retainer groove is configured to direct the flow of lubricant toward the radial retainer groove.

Additionally or alternatively, in this or other embodiment the clutch assembly includes two clutch axial retainers positioned at opposing axial ends of the clutch body.

### BRIEF DESCRIPTION OF THE DRAWINGS

The following descriptions should not be considered limiting in any way. With reference to the accompanying drawings, like elements are numbered alike:
FIG. 1 is a schematic cross-sectional view of an embodiment of a turboshaft engine with an output shaft connected thereto
FIG. 2 is a schematic illustration of an embodiment of a clutch and bearing arrangement of a turboshaft engine;
FIG. 3 is another schematic illustration of an embodiment of a clutch and bearing arrangement of a turboshaft engine; and
FIG. 4 is a schematic illustration of an embodiment of a clutch axial retainer.

### DETAILED DESCRIPTION

A detailed description of one or more embodiments of the disclosed apparatus and method are presented herein by way of exemplification and not limitation with reference to the Figures.

The following disclosure is applicable to any type of gas turbine engine, including, but not limited to, turbofans, turboshafts, turboprops, turbojets, etc. Additionally, the teachings of the present disclosure may be readily applied to, for example, hybrid electric and electric powerplant systems as well. The gas turbine engine described below is provided by way of example, and should not be interpreted as limiting the scope of the application or the claims in any way.

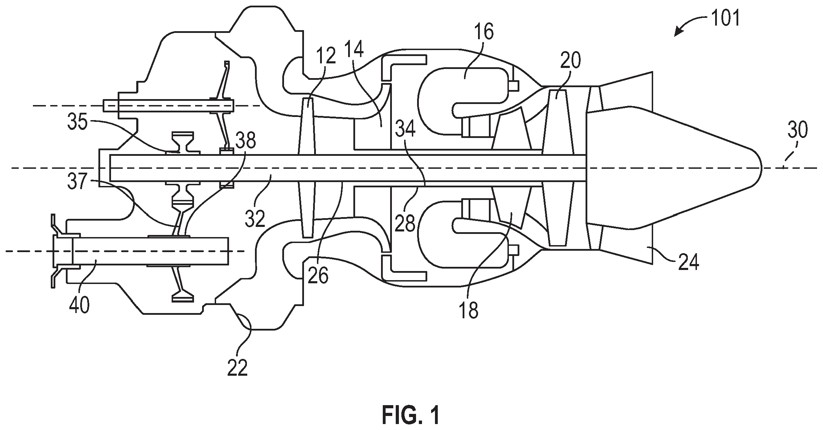

With reference to FIG. 1, a turboshaft engine 101 is provided and configured as a gas turbine engine. In particular, the turboshaft engine 101 is a generally conventional turboshaft engine generally including, in serial flow communication, a low pressure (LP) compressor section 12 and a high pressure (HP) compressor section 14 for pressurizing air, a combustor 16 in which the compressed air is mixed with fuel and ignited for generating an annular stream of hot combustion gases, a high pressure turbine section 18 for extracting energy from the combustion gases and driving the high pressure compressor section 14 and a lower pressure turbine section 20 for further extracting energy from the combustion gases and driving at least the low pressure compressor section 12.

The low pressure compressor section 12 may independently rotate from the high pressure compressor section 14. The low pressure compressor section 12 may include one or more compression stages and the high pressure compressor section 14 may include one or more compression stages. A compressor stage may include a compressor rotor, or a combination of the compressor rotor and a compressor stator assembly. In a multistage compressor configuration, the compressor stator assemblies may direct the air from one compressor rotor to the next.

The turboshaft engine 101 has multiple, i.e. two or more, spools which may perform the compression to pressurize the air received through an air inlet 22, and which extract energy from the combustion gases before they exit via an exhaust outlet 24. For example, the turboshaft engine 101 can include a low pressure spool 26 and a high pressure spool 28 mounted for rotation about an engine axis 30. The low pressure and high pressure spools 26, 28 are independently rotatable relative to each other about the axis 30. The term "spool" is herein intended to broadly refer to drivingly connected turbine and compressor rotors.

The low pressure spool 26 includes a low pressure shaft 32 interconnecting the low pressure turbine section 20 with the low pressure compressor section 12 to drive rotors of the low pressure compressor section 12. In other words, the low pressure compressor section 12 may include at least one low pressure compressor rotor directly drivingly engaged to the low pressure shaft 32 and the low pressure turbine section 20 may include at least one low pressure turbine rotor directly drivingly engaged to the low pressure shaft 32 so as to rotate the low pressure compressor section 12 at a same speed as the low pressure turbine section 20. The high pressure spool 28 includes a high pressure shaft 34 interconnecting the high pressure turbine section 18 with the high pressure compressor section 14 to drive rotors of the high pressure compressor section 14. In other words, the high pressure compressor section 14 may include at least one high pressure compressor rotor directly drivingly engaged to the high pressure shaft 34 and the high pressure turbine section 18 may include at least one high pressure turbine rotor directly drivingly engaged to the high pressure shaft 34 so as to rotate the high pressure compressor section 14 at a same speed as the high pressure turbine section 18. In some embodiments, the high pressure shaft 34 may be hollow and the low pressure shaft 32 extends therethrough. The two shafts 32, 34 are free to rotate independently from one another. The low pressure shaft 32 is operably connected to a rotatable output shaft 40 via a gear arrangement. The gear arrangement includes a powertrain input gear 35 on the low pressure shaft 32 and rotatable therewith, and a powertrain output gear 37 meshed with the powertrain input gear 35.

A clutch 38 is operable to connect the powertrain output gear 37 to the output shaft 40. The clutch 38 is operated to drive rotation of the output shaft 40 via rotation of the powertrain output gear 37. In some embodiments the engagement of the clutch 38 is automatic, and depends on a relative rotational speed of the output shaft 40 and the powertrain output gear 37.

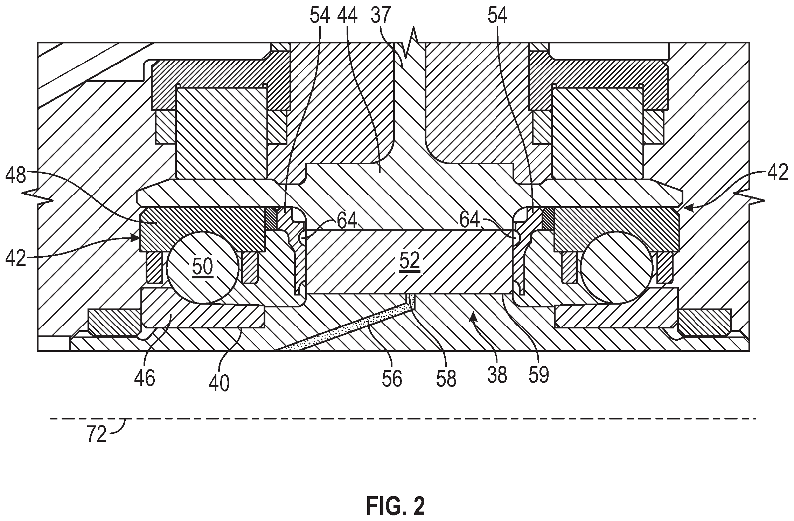

Referring now to FIG. 2, clutch bearings 42 radially and axially support powertrain output gear 37 and output shaft 40 relative to each other. In the embodiment of FIG. 2, two clutch bearings 42 are utilized, a first clutch bearing 42 positioned at a first axial side of the clutch 38 and a second clutch bearing 42 positioned at a second axial side of the clutch 38. The clutch 38 is positioned radially between the output shaft 40 and the powertrain output gear 37. In an exemplary embodiment, each clutch bearing 42 includes a bearing inner race 46 positioned at the output shaft 40 and a bearing outer race 48 located radially outboard of the bearing inner race 46 at a powertrain output gear inner surface 44. A plurality of bearing elements 50 are positioned between the bearing inner race 46 and the bearing outer race 48. The clutch 38 includes a clutch body 52 and clutch axial retainers 54 located at each axial end of the clutch body 52. The clutch axial retainers 54 are positioned and configured to axially position the clutch body 52 relative to the powertrain output gear 37 and the output shaft 40 and to limit axial movement of the clutch 38.

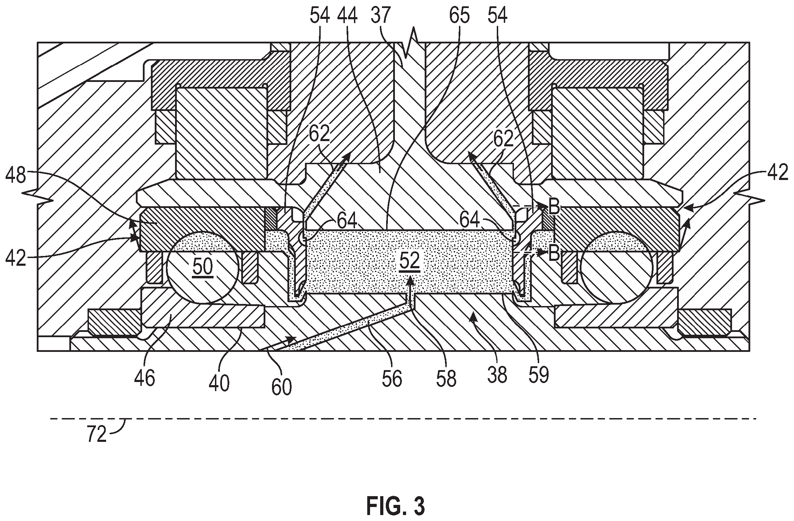

The output shaft 40 includes a lubricant passage 56 therethrough extending to a shaft orifice 58 at an output shaft outer surface 59 to provide a flow of lubricant to the clutch 38. Referring now to FIG. 3, the flow of lubricant 60 is directed to the clutch body 52, and overflow from the clutch body 52 is directed around the clutch axial retainers 54 to the clutch bearings 42 thus providing lubrication to the clutch bearings 42. The output gear 44 includes one or more outlet passages 62 extending therethrough to direct the flow of lubricant 60, together with any included or entrained contaminants, from the clutch body 52. To provide a pathway from the clutch body 52 to the outlet passages 62, the clutch axial retainers 54 are configured with retainer radial grooves 64 to direct the flow of lubricant 60 from the clutch body 52 to the outlet passages 62 via these retainer radial grooves 64.

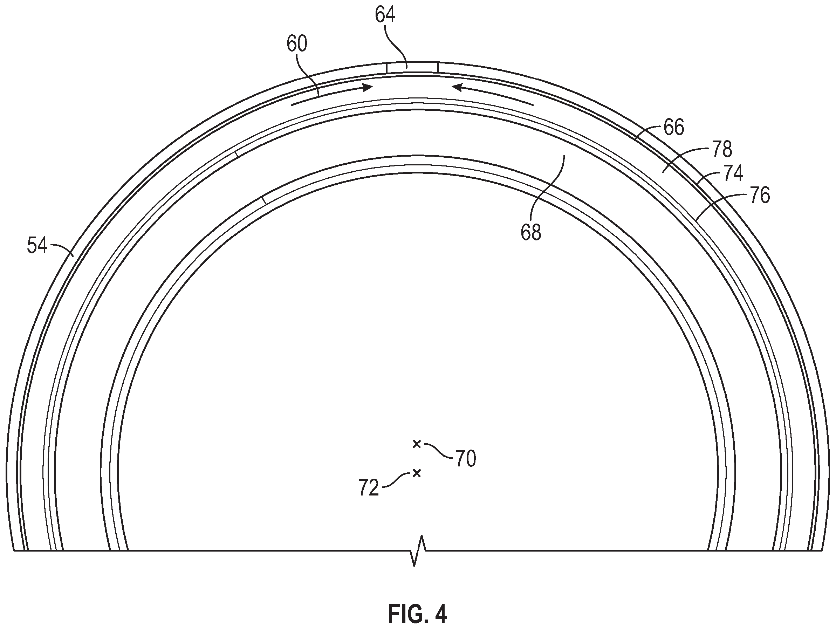

Referring now to FIG. 4, the clutch axial retainers 54 further include circumferential retainer grooves 66 that extend circumferentially along a clutch axial retainer inner axial surface 68 nearest the clutch body 52. The circumferential retainer grooves 66 include a radial outer surface 74 and a radial inner surface 76 defining an annular cavity 78 therebetween. In some embodiments, the circumferential retainer grooves 66 are positioned radially outboard of a clutch body outer surface 65. The circumferential retainer grooves 66 are circular and have a groove central axis 70 offset from the axis of rotation 72 of the powertrain output shaft 40. In some embodiments, the retainer radial groove 64 is positioned along a line connecting the groove central axis 70 and the axis of rotation 72. The circumferential retainer grooves 66 intersect with the retainer radial grooves 64, and direct the flow of lubricant 60 and contaminants circumferentially along the circumferential retainer grooves 66 and radially outwardly through the retainer radial grooves 64 and into the one or more outlet passage 62 to thereby flush or otherwise remove the contaminants from the clutch body 52 or to prevent their accumulation at the clutch body 52. While one retainer radial groove 64 and one circumferential retainer groove 66 are illustrated, one skilled in the art will readily appreciate that some embodiments may include more than one retainer radial groove 64 and/or more than one circumferential retainer groove 66.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A shaft and clutch arrangement, comprising:
a first rotating element, a shaft, rotatable about an axis of rotation;
a second rotating element concentric with the shaft; and
a clutch assembly connecting the shaft and the second rotating element;
wherein the shaft includes a lubricant passage to direct a flow of lubricant to the clutch assembly for the lubrication thereof; and
wherein the second rotating element includes one or more lubricant outlet passages to direct the flow of lubricant away from the clutch assembly.

2. The shaft and clutch arrangement of claim 1, further comprising one or more bearing assemblies disposed at and supportive of the shaft and the second rotating element.

3. The shaft and clutch arrangement of claim 2, wherein the flow of lubricant is directed to the one or more bearing assemblies via the lubricant outlet passage of the shaft.

4. The shaft and clutch arrangement of any preceding claim, wherein the second rotating element is a gear including an inner surface coupled to the clutch assembly.

5. The shaft and clutch arrangement of claim 4, wherein the one or more lubricant outlet passages extend through the second rotating element.

6. The shaft and clutch arrangement of any preceding claim, wherein the clutch assembly includes:
a clutch body configured for engagement with the shaft and the second rotating element; and
a clutch axial retainer extending around the axis of rotation, the clutch axial retainer located at at least one axial end of the clutch body configured to axially position the clutch body relative to at least the shaft;
wherein the clutch axial retainer includes a radial retainer groove defining a gap between the shaft and the clutch axial retainer, the radial retainer groove configured to direct the flow of lubricant from the clutch body to the one or more lubricant outlet passages.

7. A turboshaft engine system, comprising:
a turboshaft engine including:
a combustor;
a turbine driven by combustion products of the combustor, the turbine including a shaft rotated about an axis of rotation;
an output shaft operably connected to the shaft via a gear train;
a clutch assembly configured to operably connect an output gear of the gear train to the output shaft to drive rotation of the output shaft via rotation of the output gear about an output shaft axis of rotation;
wherein the output shaft includes a lubricant passage to direct a flow of lubricant to the clutch assembly for the lubrication thereof; and
wherein the output gear includes one or more lubricant outlet passages to direct the flow of lubricant away from the clutch assembly.

8. The turboshaft engine system of claim 7, wherein the clutch assembly includes:
a clutch body configured for engagement with the output gear and the output shaft; and
a clutch axial retainer extending around the output shaft axis of rotation, the clutch axial retainer located at at least one axial end of the clutch body configured to axially position the clutch body relative to at least the output gear;
wherein the clutch axial retainer includes a radial retainer groove defining a gap between the output gear and the clutch axial retainer, the radial retainer groove configured to direct the flow of lubricant from the clutch body to the one or more lubricant outlet passages.

9. The turboshaft engine system of claim 8, wherein the clutch axial retainer further includes a circumferential retainer groove having a groove central axis offset from the output shaft axis of rotation;
wherein the circumferential retainer groove is configured to direct the flow of lubricant toward the radial retainer groove.

10. The turboshaft engine system of claim 7, 8 or 9, further comprising one or more bearing assemblies disposed at and supportive of the output shaft and the output gear at the clutch assembly.

11. The turboshaft engine system of claim 10, wherein the flow of lubricant is directed to the one or more bearing assemblies via the lubricant outlet passage of the output shaft.

12. The turboshaft engine system of any of claims 7 to 11, wherein the output gear includes an output gear inner surface coupled to the clutch assembly; and / or
wherein the one or more lubricant outlet passages extend through the output gear; and/or
wherein the turboshaft engine is a two-spool turboshaft engine; and
wherein the shaft is a low pressure spool shaft of the turboshaft engine.

13. A clutch assembly comprising:
a clutch body configured to connect a first rotating element, a shaft and a second rotating element concentric with the shaft; and
one or more clutch axial retainers extending around an axis of rotation of the shaft, the clutch axial retainer located at at least one axial end of the clutch body configured to axially position the clutch body relative to at least the shaft;
wherein the clutch axial retainer includes a radial retainer groove defining a gap between the shaft and the clutch axial retainer, the radial retainer groove configured to direct the flow of lubricant from the clutch body and out of the clutch assembly.

14. The shaft and clutch arrangement of claim 6 or the clutch assembly of claim 13, wherein the clutch axial retainer further includes a circumferential retainer groove having a groove central axis offset from the axis of rotation;
wherein the circumferential retainer groove is configured to direct the flow of lubricant toward the radial retainer groove.

15. The shaft and clutch arrangement of claim 6 or 14, the turboshaft engine of any of claims 8 to 12 or the clutch assembly of claim 13 or 14, wherein the clutch assembly includes two clutch axial retainers disposed at opposing axial ends of the clutch body.
